# EUROPEAN PATENT APPLICATION

(11) **EP 3 726 550 A1**
(43) Date of publication of application: **21.10.2020**
(21) Application number: 18888435.7
(22) Date of filing: 26.11.2018
(51) Int. Cl.: H01G 9/20

(54) **ELECTROLYTE COMPOSITION AND USE THEREOF**

(30) Priority: 13.12.2017 JP 2017238672
(71) Applicant: Daicel Corporation, Osaka-shi, Osaka 530-0011 (JP)
(72) Inventor: FUKUI, Kazuhisa, Tokyo 108-8230 (JP)
(74) Representative: Grünecker Patent- und Rechtsanwälte PartG mbB
(86) International application number: PCT/JP2018/043371
(87) International publication number: WO 2019/116865

(57) **Abstract**

Provided is an electrolyte composition containing iodine (A), a sulfur compound (B) excluding organic salts, and a basic nitrogen compound (C). This electrolyte composition may have a light transmittance at a wavelength of 400 nm in an optical path length of 1 cm of 30% or higher. The sulfur compound (B) may be at least one selected from the group consisting of a thiol, a sulfide, and a disulfide (particularly a thiol having a chain or cyclic alkane backbone, such as a linear or branched C₄₋₁₈ alkanethiol). The basic nitrogen compound (C) may be an amine (particularly a pyridine). A proportion of the sulfur compound (B) may be approximately from 0.1 to 2 times the molar amount of the basic nitrogen compound (C). The electrolyte composition may further contain an iodide salt. The electrolyte composition may be an electrolyte solution for dye-sensitized solar cells. The electrolyte composition can be easily and conveniently prepared and, although contains iodine, is highly transparent and also has reduced coloration.

## Description

### Technical Field

The present invention relates to an electrolyte composition that can be utilized for an electrolyte solution for dye-sensitized solar cells and the like, and a use of the electrolyte composition.

### Background Art

Solar cells are attracting attention as a "clean energy" source with a small environmental load and are actually put into practical use. However, the solar cells have problems including low conversion efficiency for weak light, such as room light. Thus, development is actively carried out to improve the photoelectric conversion efficiency of the solar cells by improving a photoelectric conversion device itself. On the other hand, development to improve an electrolyte solution is also carried out to improve the photoelectric conversion efficiency of the solar cells.

JP 2009-76369 A (Patent Document 1) discloses, as a dye-sensitized solar cell with improved electromotive force, maximum output, and recycling properties, a dye-sensitized solar cell including an electrolyte layer containing a nitroxy radical compound. This document also states that a new type of dye-sensitized solar cell system containing no halogen ion, such as an iodine ion, can be constructed, thereby preventing corrosion due to leak of a halogen ion contained in the electrolyte. In examples, electrolytic solutions (electrolyte solutions) are prepared, including: an electrolyte solution containing a nitroxy compound as a redox mediator, tetrabutylammonium perchlorate, and methoxypropionitrile; and an electrolyte solution prepared by adding a nitroxy compound to an I⁻/I₃⁻ electrolyte solution.

However, this electrolyte layer, when containing iodine, has reduced transparency due to coloration and reduced photoelectric conversion efficiency.

JP 2012-195280 A (Patent Document 2) discloses, as a photoelectric conversion device, such as a solar cell, with improved durability, a photoelectric conversion device including an electrolyte layer containing a salt having an anion with a molecular weight of 59.04 g/mol or greater and an additive with 6.04 ≤ pKa ≤ 7.3. In examples, an electrolyte solution containing iodine is prepared, where the electrolyte solution includes guanidinium trifluorosulfonate (GuOTf) or the like as the salt having an anion and further containing 2-aminopyridine, 4-methoxypyridine, 4-ethylpyridine, N-methylimidazole, lutidine, or the like as the additive with 6.04 ≤ pKa ≤ 7.3.

However, this electrolyte layer also has reduced transparency due to coloration and reduced photoelectric conversion efficiency.

WO 2006/123785 (Patent Document 3) discloses, as an electrolyte composition for dye-sensitized solar cells, the electrolyte composition in which coloration due to iodine is suppressed without causing a decrease in photoelectric conversion efficiency over time, an electrolyte composition containing a medium and an iodine-cyclodextrin inclusion compound that is poorly soluble in the medium and has an average particle size of 20 µm or less. In an example, an electrolyte composition is prepared, the electrolyte composition including the inclusion compound, lithium iodide, 4-t-butylpyridine, 1-propyl-2,3-dimethylimidazolium-iodine, and 3-methoxypropionitrile.

However, this electrolyte composition not only needs cyclodextrin but also requires synthesis of the iodine-cyclodextrin inclusion compound in advance and control of the particle size of the inclusion compound poorly soluble in the medium, thus reducing handling property and productivity. In addition, the iodine-cyclodextrin inclusion compound is poorly soluble in the medium, and only a limited amount can be added, thus failing to provide sufficient iodine concentration.

### Citation List

### Patent Document

Patent Document 1: JP 2009-76369 A (Claim 1, Paragraph [0009], and Examples)
Patent Document 2: JP 2012-195280 A (Claims 1 and 3, and Examples)
Patent Document 3: WO 2006/123785 (Claim 1, Paragraph [0008], and Examples)

### Summary of Invention

### Technical Problem

Thus, an object of the present invention is to provide an electrolyte composition that can be easily and conveniently prepared and, although contains iodine, is highly transparent and also has reduced coloration, and use of the electrolyte composition.

Another object of the present invention is to provide an electrolyte composition, with which short-circuit current of an electrolyte solution can be increased, and use of such an electrolyte composition.

Still another object of the present invention is to provide an electrolyte composition, with which output characteristics of an electrolyte solution for dye-sensitized solar cells can be improved, and use of such an electrolyte composition.

### Solution to Problem

As a result of diligent research to achieve the objects described above, the present inventor found that an electrolyte composition containing iodine, a specific sulfur compound, and a basic nitrogen compound, is highly transparent and less colored even if the electrolyte composition contains iodine, and that such an electrolyte composition can be easily and conveniently prepared, and thus completed the present invention.

That is, an electrolyte composition according to an embodiment of the present invention contains iodine (A), a sulfur compound (B) excluding organic salts, and a basic nitrogen compound (C). This electrolyte composition may have a light transmittance at a wavelength of 400 nm in an optical path length of 1 cm of 30% or higher. The sulfur compound (B) may be at least one selected from the group consisting of a thiol, a sulfide, and a disulfide (particularly a thiol having a chain or cyclic alkane backbone, such as a linear or branched C₄₋₁₈ alkanethiol). The basic nitrogen compound (C) may be an amine (particularly a pyridine). A proportion of the sulfur compound (B) may be approximately from 0.1 to 2 times the molar amount of the basic nitrogen compound (C). The electrolyte composition may further contain an iodide salt (D). The electrolyte composition may be a composition containing no cyclodextrin. The electrolyte composition may be an electrolyte solution.

An embodiment of the present invention also includes a dye-sensitized solar cell in which an electrolyte solution is the electrolyte composition.

### Advantageous Effects of Invention

In an embodiment of the present invention, a highly transparent electrolyte composition containing iodine, a specific sulfur compound, and a basic nitrogen compound can be easily and conveniently prepared. This electrolyte composition is highly transparent and less colored even if the electrolyte composition contains iodine, and thus can increase short-circuit current when used as an electrolyte solution. Thus, the electrolyte composition can improve output characteristics as an electrolyte solution for dye-sensitized solar cells.

### Brief Description of Drawings

FIG. 1 is a graph showing output characteristics of an electrolyte solution obtained in Example 1.
FIG. 2 is a graph showing output characteristics of an electrolyte solution obtained in Example 2.
FIG. 3 is a graph showing output characteristics of an electrolyte solution obtained in Example 3.
FIG. 4 is a graph showing output characteristics of an electrolyte solution obtained in Example 4.
FIG. 5 is a graph showing output characteristics of an electrolyte solution obtained in Example 7.
FIG. 6 is a graph showing output characteristics of an electrolyte solution obtained in Example 8.
FIG. 7 is a graph showing output characteristics of an electrolyte solution obtained in Example 9.
FIG. 8 is a graph comparing output characteristics of an electrolyte solution according to an embodiment of the present invention and an electrolyte solution known in the art.
FIG. 9 is UV-Vis spectra of an electrolyte solution according to an embodiment of the present invention and an electrolyte solution known in the art.

### Description of Embodiments

### Electrolyte composition

An electrolyte composition according to an embodiment of the present invention, although contains iodine (A), contains a combination of a specific sulfur compound (B) and a basic nitrogen compound (C) and thus has high transparency. The iodine (A) may be in the form of a molecular iodine I2 in the composition but may be ionized and may be present in the form of I⁻ or I³⁻.

The electrolyte composition according to an embodiment of the present invention may have a light transmittance, at a wavelength of 450 nm in an optical path length of 1 cm, of 10% or higher (e.g., from 30 to 100%), for example, 50% or higher (e.g., from 50 to 100%), preferably 70% or higher (e.g., from 70 to 99.9%), more preferably 80% or higher (e.g., from 80 to 99%), and particularly 90% or higher (e.g., from 90 to 98%). In an embodiment of the present invention, the electrolyte composition exhibits high transmittance in such visible light region and thus has excellent transparency.

The electrolyte composition according to an embodiment of the present invention may have a light transmittance, at a wavelength of 400 nm in an optical path length of 1 cm, of 10% or higher (e.g., from 20 to 100%), for example, 30% or higher (e.g., from 30 to 99%), preferably 40% or higher (e.g., from 40 to 95%), more preferably 50% or higher (e.g., from 50 to 90%), and particularly 60% or higher (e.g., from 60 to 80%). In an embodiment of the present invention, the electrolyte composition also exhibits high transmittance of high-energy light in such a short wavelength, and thus light energy can be effectively utilized in a photoelectric conversion device.

The electrolyte composition according to an embodiment of the present invention does not exhibit a brownish or orange hue unique to iodine, and is less colored. The electrolyte composition according to an embodiment may be light-colored or colorless, and is preferably colorless and transparent.

The electrolyte composition according to an embodiment of the present invention is not particularly limited in its form, as long as the electrolyte composition has light transmittance as described above. The electrolyte composition may be any of a liquid, a gel, or a solid, and can be selected according to the use. In a dye-sensitized solar cell, the electrolyte composition is typically utilized as an electrolyte solution and thus is a liquid.

The sulfur compound (B) needs to be a sulfur compound other than an organic salt. Examples of the sulfur compound include a thiol, a thioether, a sulfoxide, a sulfone, a thioketone, a sulfonic acid, and a disulfide. These sulfur compounds can be used alone or in combination of two or more. Among these sulfur compounds, a thiol, a sulfide, and a disulfide effectively improve the transparency of the composition, and therefore are preferable.

The thiol needs to be a compound having a thiol group, and examples of the thiol include an alkanethiol (e.g., such as a linear or branched C₁₋₂₄ alkanethiol, such as methanethiol, ethanethiol, propanethiol, isopropanethiol, n-butanethiol, hexanethiol, octanethiol, decanethiol, dodecanethiol, and octadecanethiol), a cycloalkanethiol (e.g., such as a C₄₋₁₀ cycloalkanethiol, such as cyclopentanethiol, cyclohexanethiol, cycloheptanethiol, cyclooctanethiol, and cyclodecanethiol), an arenethiol (e.g., such as a C₆₋₁₀ arenethiol, such as thiophenol and naphthalenethiol), an aralkyl mercaptan (e.g., such as benzyl mercaptan), thioacetic acid, and a mercaptocarboxylic acid (e.g., such as a mercapto C₂₋₆ carboxylic acid, such as thioglycolic acid (mercaptoacetic acid) and mercaptopropionic acid). These thiols may form salts similarly to a hydroxy compound. The salt may be exemplified by an alkali metal salt (such as a sodium salt). These thiols can be used alone or in combination of two or more.

The sulfide needs to be a compound having a sulfide bond, and examples of the sulfide include a dialkyl sulfide (e.g., such as a di linear or branched C₁₋₂₄ alkyl sulfide, such as dimethyl sulfide, diethyl sulfide, dipropyl sulfide, diisopropyl sulfide, di n-butyl sulfide, dihexyl sulfide, dioctyl sulfide, didecyl sulfide, didodecyl sulfide, and dioctadecyl sulfide), a dicycloalkyl sulfide (e.g., such as a di C₄₋₁₀ cycloalkyl sulfide, such as dicyclopentyl sulfide, dicyclohexyl sulfide, dicycloheptyl sulfide, dicyclooctyl sulfide, and dicyclodecyl sulfide), and a diaryl sulfide (e.g., such as a di C₆₋₁₀ aryl sulfide, such as diphenyl sulfide and dinaphthyl sulfide). These sulfides can be used alone or in combination of two or more.

The disulfide needs to be a compound having a disulfide bond, and examples of the disulfide include a dialkyl disulfide (e.g., such as a di linear or branched C₁₋₂₄ alkyl disulfide, such as dimethyl disulfide, diethyl disulfide, dipropyl disulfide, diisopropyl disulfide, di n-butyl disulfide, dihexyl disulfide, dioctyl disulfide, didecyl disulfide, didodecyl disulfide, and dioctadecyl disulfide), a dicycloalkyl disulfide (e.g., such as a di C₄₋₁₀ cycloalkyl disulfide, such as dicyclopentyl disulfide, dicyclohexyl disulfide, dicycloheptyl disulfide, dicyclooctyl disulfide, and dicyclodecyl disulfide), and a diaryl disulfide (e.g., such as a di C₆₋₁₀ aryl disulfide, such as diphenyl disulfide and dinaphthyl disulfide). These disulfides can be used alone or in combination of two or more.

Among these sulfur compounds, a thiol is particularly preferred, and among thiols, from the viewpoint of capability to improve transparency of the composition, a thiol having an aliphatic backbone (a chain or cyclic alkane backbone, such as a linear or branched C₄₋₁₈ alkane or a C₅₋₈ cycloalkane) is preferred, and a linear or branched C₈₋₁₆ alkane thiol (particularly a linear or branched C₁₀₋₁₆ alkane thiol), such as 1-dodecanethiol, is particularly preferred.

A proportion of the sulfur compound (B) may be 0.5 times or greater the molar amount (e.g., from 0.5 to 20 times the molar amount) of the iodine (A) (iodine as I2) and is, for example, approximately from 1 to 10 times the molar amount, preferably from 1.2 to 5 times the molar amount, and more preferably from 1.5 to 4 times the molar amount (particularly from 2 to 3 times the molar amount) of the iodine (A) (iodine as I2). The proportion of the sulfur compound (B) less than these values may reduce the transparency of the composition.

A proportion of the sulfur compound (B) may be 0.01 times or greater the molar amount (e.g., from 0.01 to 10 times the molar amount) of the basic nitrogen compound (C) and is, for example, approximately from 0.1 to 2 times the molar amount (e.g., from 0.2 to 1.7 times the molar amount), preferably from 0.3 to 1.5 times the molar amount (e.g., from 0.3 to 1 time the molar amount), and more preferably from 0.4 to 0.7 times the molar amount (particularly from 0.5 to 0.6 times the molar amount) of the basic nitrogen compound (C). The proportion of the sulfur compound (B) less than these values may reduce the transparency of the composition.

The basic nitrogen compound (C) is not particularly limited as long as it is a nitrogen compound having an unconjugated electron pair, but an amine or a quaternary ammonium salt (excluding a quaternary ammonium iodide salt described below) can be typically used, and from the viewpoint of handling property, an amine (such as a tertiary amine), such as an aliphatic tertiary amine, an aromatic amine, or a heterocyclic amine, is commonly used.

Examples of the aliphatic tertiary amine include a tri C₁₋₆ alkylamine, such as trimethylamine, triethylamine, tri-n-propylamine, tri-n-butylamine, N,N-diisopropylethylamine, and triisopropylamine; an N,N-di C₁₋₆ alkyl C₅₋₈ cycloalkylamine, such as N,N-diethylcyclohexylamine and N,N-diisopropylcyclohexylamine; an N,N-di C₅₋₈ cycloalkyl C₁₋₆ alkylamine, such as N,N-dicyclohexylethylamine and N,N-dicyclohexylisopropylamine; a triaralkylamine, such as tribenzylamine; a tetra C₁₋₆ alkylalkanediamine, such as N,N,N',N'-tetramethylethylenediamine and N,N,N',N'-tetramethylpropanediamine; a 1-C₁₋₆ alkylpyrrolidine, such as 1-methylpyrrolidine and 1-ethylpyrrolidine; a 1-C₁₋₆ alkylpiperidine, such as 1-methylpiperidine and 1-ethylpiperidine; a 2,6-di C₁₋₆ alkylpiperazine, such as 2,6-dimethylpiperadine; a 4-C₁₋₆ alkylmorpholine, such as 4-methylmorpholine and 4-ethylmorpholine; a tri C₁₋₆ alkanolamine, such as triethanolamine; a di C₁₋₆ alkyl C₁₋₆ alkanolamine, such as dimethylaminoethanol; and a cyclic amine, such as 1,5-diazabicyclo[4.3.0]nonene-5 (DBN) and 1,8-diazabicyclo[5.4.0]-undecene-7 (DBU).

Examples of the aromatic amine include a di C₁₋₆ alkylaniline, such as N,N-dimethylaniline and N,N-diethylaniline; an aralkyldialkylamine, such as benzyldimethylamine; and a dialkylaminophenol, such as tris(dimethylaminomethyl)phenol.

The heterocyclic amine includes a pyridine, a pyrrolidone, an imidazole, and the like.

Examples of the pyridine include pyridine; a linear or branched C₁₋₁₀ alkylpyridine, such as methylpyridine (picoline), ethylpyridine, propylpyridine, isopropylpyridine, n-butylpyridine, and t-butylpyridine; a di C₁₋₆ alkylpyridine, such as dimethylpyridine (lutidine); a tri C₁₋₄ alkylpyridine, such as trimethylpyridine (collidine); a C₁₋₁₀ alkylaminopyridine, such as N,N-dimethyl-4-aminopyridine; and a pyrrolidinopyridine, such as 4-pyrrolidinopyridine.

Examples of the pyrrolidone include a pyrrolidone, such as 2-pyrrolidone and 3-pyrrolidone; and an N-C₁₋₆ alkylpyrrolidone, such as N-methyl-2-pyrrolidone (NMP).

Examples of the imidazole include imidazole; a C₁₋₆ alkylimidazole, such as 1-methylimidazole, 2-methylimidazole, 2-ethylimidazole, and 2-isopropylimidazole; a di C₁₋₆ alkylimidazole, such as 2-ethyl-4-methylimidazole and 2-isopropyl-4-methylimidazole; a C₆₋₁₀ arylimidazole, such as 1-phenylimidazole and 2-phenylimidazole; and a C₁₋₆ alkylbenzimidazole, such as 1-methylbenzimidazole.

These amines may be in the form of salts. The salt may be exemplified by an inorganic salt (e.g., such as a hydrochloride, a hydrogen bromide salt, a sulfate, a nitrate, a phosphate, a carbonate, and a boron trifluoride) and an organic salt (e.g., such as a formate, an acetate, and a sulfonate).

These amines can be used alone or in combination of two or more. Among these amines, from the viewpoint of the redox function of the composition, an aliphatic tertiary amine (particularly a tri C₂₋₄ alkylamine, such as N,N-diisopropylethylamine), a heterocyclic amine (particularly a pyridine) is preferred, and a linear or branched C₂₋₆ alkylpyridine (particularly a branched C₃₋₄ alkylpyridine, such as 4-t-butylpyridine) is particularly preferred.

A proportion of the basic nitrogen compound (C) may be 1 time or greater the molar amount (e.g., from 1 to 30 times the molar amount) of the iodine (A) (iodine as I2) and is, for example, approximately from 2 to 20 times the molar amount, preferably from 2 to 10 times the molar amount, and more preferably from 3 to 8 times the molar amount (particularly from 4 to 6 times the molar amount) of the iodine (A) (iodine as I2). The proportion of the basic nitrogen compound (C) less than these values may reduce the redox function of the composition.

The electrolyte composition according to an embodiment of the present invention preferably further contains an iodide salt (D) from the viewpoint of capability to promote ionization of the iodine (A) and to improve output characteristics of cells when utilized for an electrolyte solution for dye-sensitized solar cells or the like. Examples of the iodide salt include a metal iodide salt (e.g., an alkali metal iodide salt, such as lithium iodide, sodium iodide, potassium iodide, and cesium iodide; and an alkaline earth metal iodide salt, such as magnesium iodide and calcium iodide), and a quaternary ammonium iodide (e.g., a tetra C₁₋₆ alkylammonium iodide, such as tetraethylammonium iodide; a benzyl tri C₁₋₆ alkylammonium iodide, such as benzyltrimethylammonium iodide; pyridinium iodide; and an imidazolium iodide, such as 1,2-dimethyl-3-ammonium iodide). These iodide salts can be used alone or in combination of two or more. Among these iodide salts, an alkali metal iodide salt, such as lithium iodide is commonly used.

A proportion of the iodide salt (D) may be 1 time or greater the molar amount (e.g., from 1 to 10 times the molar amount) of the iodine (A) (iodine as I2) and is, for example, approximately from 1.1 to 5 times the molar amount, preferably from 1.2 to 3 times the molar amount, and more preferably from 1.5 to 2.5 times the molar amount (particularly from 1.8 to 2.2 times the molar amount) of the iodine (A) (iodine as I2). The proportion of the iodide salt (D) less than these values may fail to exhibit the effect of the iodide salt (D).

The electrolyte composition according to an embodiment of the present invention, when it is in a liquid form, preferably further contains a solvent (E). Examples of the solvent include water, an alcohol, an ether, an ester, a lactone, a ketone, an amide, a sulfolane, a sulfoxide, a nitrile, a carbonate, a hydrocarbon (such as an aliphatic hydrocarbon and an aromatic hydrocarbon), and a halogenated hydrocarbon. These solvents may be non-flammable. These solvents can be used alone or in combination of two or more.

These solvents can be appropriately selected according to the use, and from the viewpoint of high relative permittivity, the following solvents are preferred: such as an alcohol (e.g., an alkanol, such as ethanol; and a glycol, such as ethylene glycol and polyethylene glycol), a nitrile (e.g., such as acetonitrile, butyronitrile, methoxyacetonitrile, propionitrile, 3 - methoxypropionitrile, and benzonitrile), a carbonate (e.g., such as ethylene carbonate, propylene carbonate, butylene carbonate, and diethyl carbonate), a lactone (e.g., such as γ-butyrolactone), an ether (e.g., a chain ether, such as dimethyl ether; and a cyclic ether, such as tetrahydrofuran), and an amido (e.g., such as N,N-dimethylformamide and N,N-dimethylacetamide). In an electrolyte solution for dye-sensitized solar cells, a nitrile (e.g., such as a C₂₋₆ alkanenitrile, such as acetonitrile or butyronitrile) or an alcohol (e.g., an alkanol, such as t-butanol) is commonly used.

A proportion of the solvent (E) is selected to make a concentration (mol/L) of the iodine (A) (iodine as I₂) in the composition in a range of approximately 0.0001 to 10 M and may be, for example, approximately from 0.0005 to 1 M (e.g., from 0.001 to 0.1 M), preferably from 0.001 to 0.01 M, and more preferably from 0.003 to 0.008 M.

The electrolyte composition according to an embodiment of the present invention may further contain, as an additional component, an additional electrolyte (e.g., such as an additional halogen element, such as bromine; an additional halide salt, such as a bromide salt or a fluoride salt; an ionic liquid (a room temperature molten salt), a gel electrolyte, or a solid electrolyte) or an additive commonly used in the art (e.g., such as a stabilizer, a flame retardant, or a pH adjusting agent). A proportion of the additional component is, for example, approximately from 0.001 to 0.5 times the molar amount, preferably from 0.005 to 0.1 times the molar amount, and more preferably from 0.01 to 0.05 times the molar amount of the iodine (A) (iodine as I₂).

The electrolyte composition according to an embodiment of the present invention can improve the transparency of the composition when combined with the sulfur compound (B) and the basic nitrogen compound (C), and thus eliminates the need for compounding cyclodextrin, which is used in Patent Document 3. Thus, the electrolyte composition according to an embodiment of the present invention preferably contains substantially no cyclodextrin and particularly preferably contains no cyclodextrin.

### Use of electrolyte composition

The electrolyte composition according to an embodiment of the present invention can be utilized for various uses which require ionic conductivity (e.g., such as cells, semiconductor devices, and photoelectric conversion devices), and may be utilized for uses which utilize the redox ability of the iodine (A). In particular, from the viewpoint of excellent transparency and non-coloration, the electrolyte composition is preferably utilized for photoelectric conversion devices, such as solar cells and is particularly preferably utilized as an electrolyte solution for dye-sensitized solar cells. The electrolyte composition, when utilized as an electrolyte solution for dye-sensitized solar cells, can suppress absorption of light of an iodide ion and thus can suppress reduction of light contributing to photoelectric conversion and suppress decrease in short-circuit current and the like.

The dye-sensitized solar cell according to an embodiment of the present invention is not particularly limited as long as the electrolyte solution is the electrolyte composition described above. For example, the dye-sensitized solar cell may be constituted of a transparent electrode including a photoelectric conversion layer containing a semiconductor and a dye; a counter electrode disposed opposite to this transparent electrode; and an electrolyte solution interposed between the electrodes and sealed.

The transparent electrode typically includes a photoelectric conversion layer layered on one surface of a transparent conductive layer, the photoelectric conversion layer containing a semiconductor and a dye, and the transparent conductive layer is formed of a transparent substrate, such as a glass plate or a transparent plastic plate, and a transparent conductive layer layered on the transparent substrate, where the transparent conductive layer may be a fluorine-doped tin oxide (FTO) or an indium oxide-tin oxide complex oxide (ITO).

For the semiconductor, a semiconductor commonly used for dye-sensitized solar cells in the art can be utilized, and the semiconductor may be an organic semiconductor. From the viewpoint of durability, the semiconductor is preferably an inorganic semiconductor and is typically constituted of an n-type semiconductor (e.g., a metal oxide, such as titanium oxide or zinc oxide). The semiconductor (such as titanium oxide) may be formed on the transparent conductive layer by sintering or may be formed by coating a dispersion (such as a water dispersion) of the semiconductor in a mixture with an ionic binder (and a dye described below) and then drying or heating. The ionic binder may be, for example, a fluorine-containing resin having a sulfo group (such as Nafion (trade name)). In addition, a commercially available semiconductor may be utilized, or a semiconductor synthesized utilizing a method commonly used in the art may be used. For example, a dispersion of titanium oxide can be prepared by a method described in JP 4522886 B or the like.

Also, for the dye, a dye commonly used for dye-sensitized solar cells in the art can be utilized, and the dye is not particularly limited as long as it is a component that functions as a sensitizer (a sensitizer dye or a photosensitizer dye). For example, an organic dye or an inorganic dye (e.g., such as a carbon pigment, a chromate pigment, a cadmium pigment, a ferrocyanide pigment, a metal oxide pigment, a silicate pigment, or a phosphate pigment) can be utilized, and a dye having a functional group, such as a carboxyl group, an ester group, or a sulfo group, as a ligand (e.g., a ruthenium dye having a carboxyl group, such as N719) is typically used. The dye may be mixed with the semiconductor and layered on the transparent conductive layer as described above or may be adsorbed to the semiconductor layered on the transparent conductive layer.

For the counter electrode, a counter electrode commonly used for dye-sensitized solar cells in the art can be utilized. For example, the counter electrode may be constituted of a conductive layer (such as a transparent conductive layer similar to the transparent electrode described above) and a catalyst layer formed on this conductive layer. The counter electrode may be a cathode or an anode depending on the type of semiconductor constituting the transparent electrode described above. That is, when the semiconductor is an n-type semiconductor, the counter electrode serves as a cathode. The catalyst layer (a cathode catalyst layer or an anode catalyst layer) is not particularly limited and can be formed of a conductive metal (such as gold or platinum), carbon, or the like. Here, when the conductive layer has a reducing power in addition to conductivity, the catalyst layer need not necessarily be provided. The catalyst layer or the conductive catalyst layer of the counter electrode is disposed opposite to the photoelectric conversion layer of the transparent electrode.

The electrolyte solution needs to be interposed between the transparent electrode and the counter electrode, and is typically encapsulated in a space or a gap formed by sealing both electrodes (or edges of the electrodes) with a sealing material (e.g., such as a sealing material constituted of a thermoplastic resin (such as an ionomer resin) or a thermosetting resin (such as an epoxy resin or a silicone resin)).

### Examples

Hereinafter, the present invention is described in greater detail based on examples, but the present invention is not limited to these examples.

### Examples 1 to 9 and Comparative Examples 1 to 3

### Preparation of electrolyte solution

Electrolyte solutions A to F, A⁺, B⁺, and D⁺ (Examples 1 to 9) and electrolyte solutions G to I (Comparative Examples 1 to 3) were prepared by adding 4-butylpyridine, N,N-diisopropylethylamine, 1-dodecanethiol, cyclohexanethiol, and lithium iodide in molar ratios to 1 mol of iodine shown in Table 1 and dissolving them in acetonitrile to make an iodine concentration of 0.005 M. The hue and light transmittance of each electrolyte solution were visually observed and determined with a spectrophotometer (UV-Vis: an optical path length: 1 cm, blank: acetonitrile, a measurement temperature: room temperature, and a measurement instrument: U-3900H Spectrophotometer (available from Hitachi High-Tech Science Corporation)), and the results are shown in Table 1.

### Production of dye-sensitized solar cell and measurement

On a fluorine-doped tin oxide (FTO) transparent conductive glass washed with acetone, a titanium oxide paste (Ti-Nanooxide T/SP available from SOLARONIX SA) was deposited in a square (4 mm square) with a thickness of 10 µm by a screen printing method. The FTO transparent glass was dried at 100°C on a hot plate then calcined at 500°C for 1 hour, and a titanium oxide electrode was formed.

In a mixed solvent of 50 mL of acetonitrile and 50 mL of t-butanol, 35.6 mg of an N719 dye (available from SOLARONIX SA) was dissolved. The titanium oxide electrode was immersed in this solution and left stand for 24 hours at room temperature, and the N719 dye was adsorbed to the titanium oxide electrode (titanium oxide surface). The titanium oxide electrode taken out of the dye solution was washed with methanol and dried, and thus a dye-adsorbed titanium oxide electrode was obtained.

The FTO layer side of the resulting dye-adsorbed titanium oxide electrode (dye adsorbing side) and the FTO layer side of the platinum FTO glass substrate (platinum thin film side) were sandwiched with a spacer ("Himilan" available from Du Pont-Mitsui Polychemicals Co., Ltd.) interposed between, the electrolyte solution was filled into a gap (or a space sealed with a sealing material) formed between both substrates, and a dye-sensitized solar cell was produced.

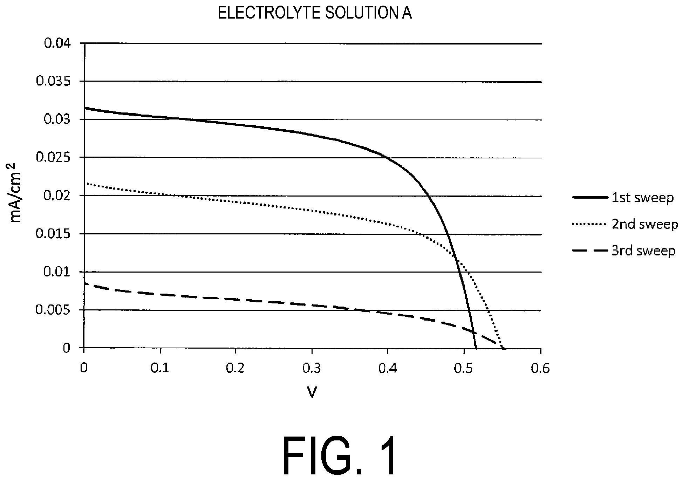

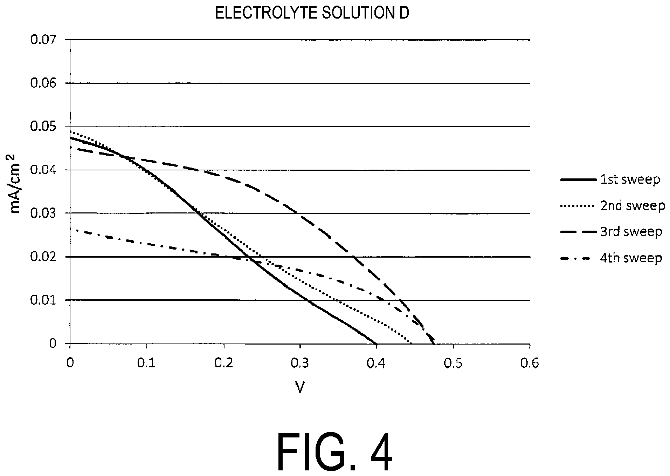

The performance of the resulting dye-sensitized solar cell was measured under the condition of 1000 Lux and 25 °C using a white LED light (LED Desk Lamp CDS-90a, available from Cosmotechno Co., Ltd.). The output characteristics of the dye-sensitized solar cells in which the electrolyte solutions A to D, A⁺, B⁺, or D⁺ was used are shown in FIGS. 1 to 7. In the graph of the output characteristics, a fill factor (FF) maintaining an initial value for a long period is preferable, and the output characteristics are preferable when a shape surrounded by vertical and horizontal axes and a curve is closer to a rectangle. Here, in the present evaluation method, in the 1st sweep, which was a first measurement, the electrolyte solution did not sufficiently penetrate the titanium oxide film, and thus the characteristics (particularly current) were not stable and degraded, and in the 4th sweep, which was a fourth measurement, the characteristics degraded because of volatilization of the electrolyte solution (see graphs in FIGS 1 to 7). Thus, the output characteristics of the solar cells were evaluated in second and third measurements (2nd and 3rd sweeps).

Evaluation results of the output characteristics and cycle characteristics (E: extremely good, G: good, A: average, and P: poor) are shown in Table 1.

### [Table 1]

**Table 1**

| | Composition (molar ratio) | | | | | | Color Light transmittance | Output/cycle characteristics |
|---|---|---|---|---|---|---|---|---|
| | Iodine | Butyl pyridine | Diisopropylethylamine | Dodecanethiol | Cyclohexanethiol | Lithium iodide | | |
| Example 1 (electrolyte solution A) | 1 | 2 | - | 2 | - | - | Light orange | G/A |
| Example 2 (electrolyte solution B) | 1 | 5 | - | 3 | - | - | Colorless and transparent | G/A |
| Example 3 (electrolyte solution C) | 1 | 5 | - | 2 | - | - | Light yellow | G/A |
| Example 4 (electrolyte solution D) | 1 | 2 | - | 3 | - | - | Colorless and transparent | A/A |
| Example 5 (electrolyte solution E) | 1 | - | 4 | 4 | - | - | Colorless and transparent | - |
| Example 6 (electrolyte solution F) | 1 | 4 | - | - | 4 | - | Colorless and transparent | - |
| Example 7 (electrolyte solution A+) | 1 | 2 | - | 2 | - | 2 | Light orange | G/G |
| Example 8 (electrolyte solution B+) | 1 | 5 | - | 3 | - | 2 | Colorless and transparent 400 nm: 69.1% 450 nm: 94.6% | E/E |
| Example 9 (electrolyte solution D+) | 1 | 2 | - | 3 | - | 2 | Colorless and transparent | E/G |
| Comparative Example 1 (electrolyte solution G) | 1 | - | - | 4 | - | - | Orange (no change) | - |
| Comparative Example 2 (electrolyte solution H) | 1 | - | - | 4 | - | 2 | Orange (no change) | - |
| Comparative Example 3 (electrolyte solution I) | 1 | 4 | - | - | - | - | Orange (no change) 400 nm: 0.32% 450 nm: 0.33% | - |

As is clear from the results in Table 1, the electrolyte solutions B, D to F, B⁺, and D⁺ were transparent. Colors of the electrolyte solutions G to I containing only either one of the amine compound or the thiol compound did not exhibit any changes from the iodine-derived orange. In addition, the results of the electrolyte solutions A to D revealed that the molar ratio of the amine compound and the thiol compound, the former/latter, in a range of about 2/3 to 5/3 provided excellent transparency.

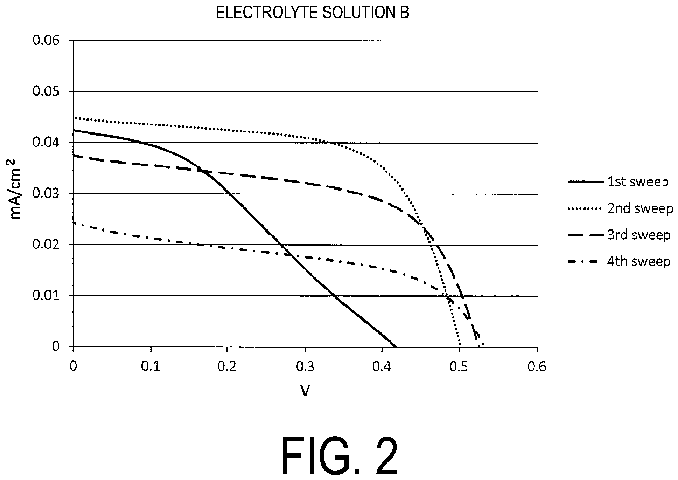

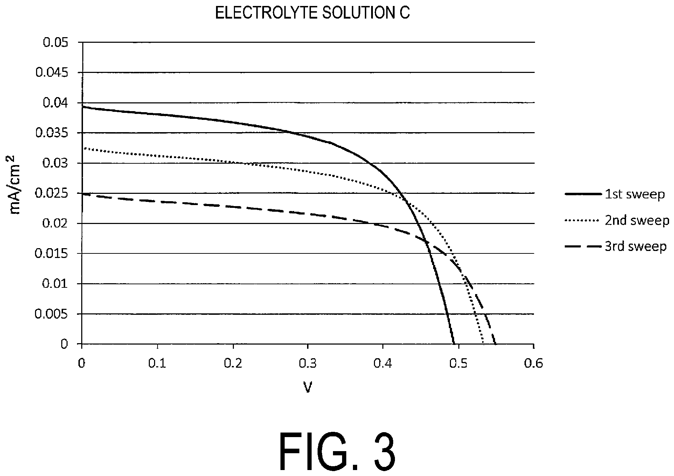

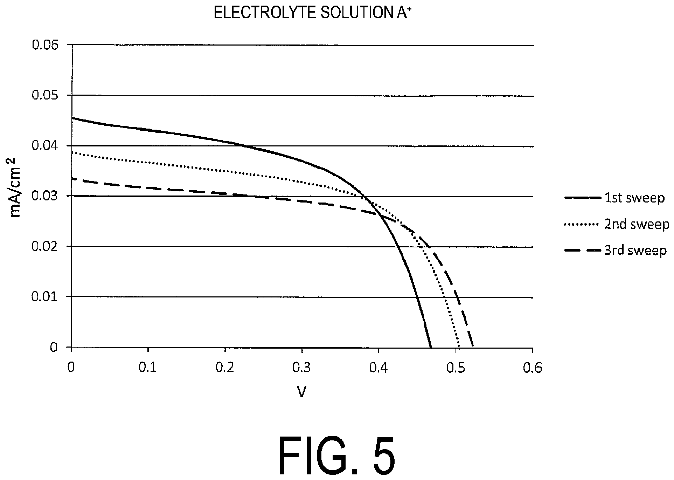

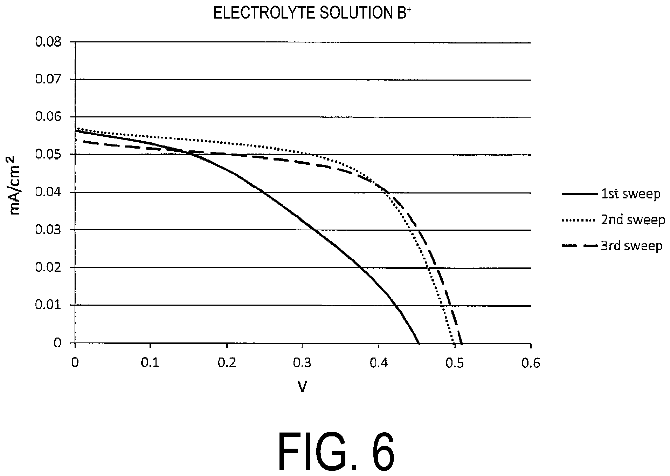

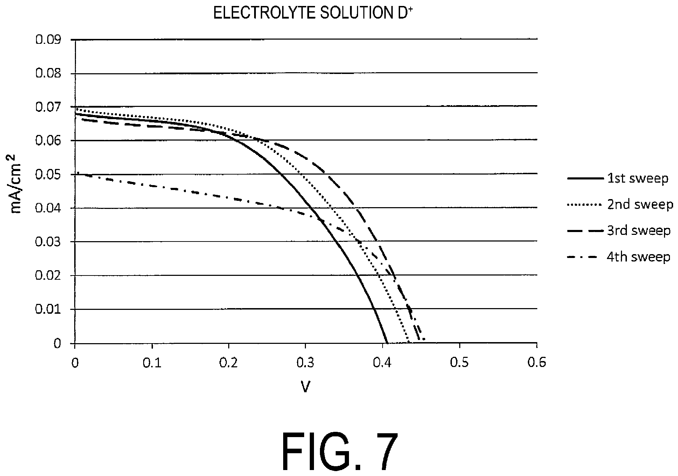

As is clear from the results in FIGS. 1 to 4, when the proportion of 1-dodecanethiol was in excess, the output characteristics was likely to degrade, and a comparison of FIGS. 1 and 5, a comparison of FIGS. 2 and 6, and a comparison of FIGS. 3 and 7 illustrate that compounding the metal iodide readily stabilized the output characteristics.

### Example 10 and Comparative Example 4

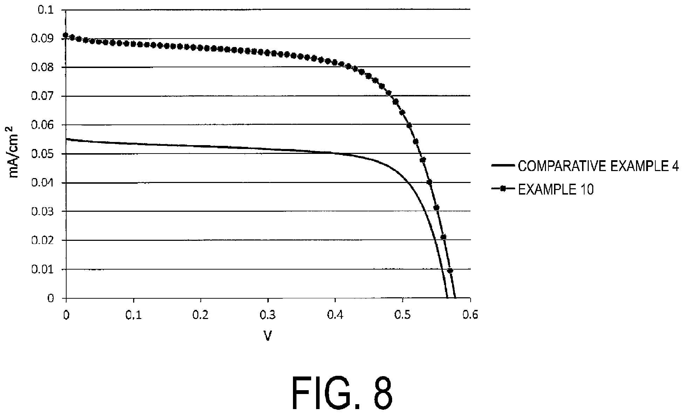

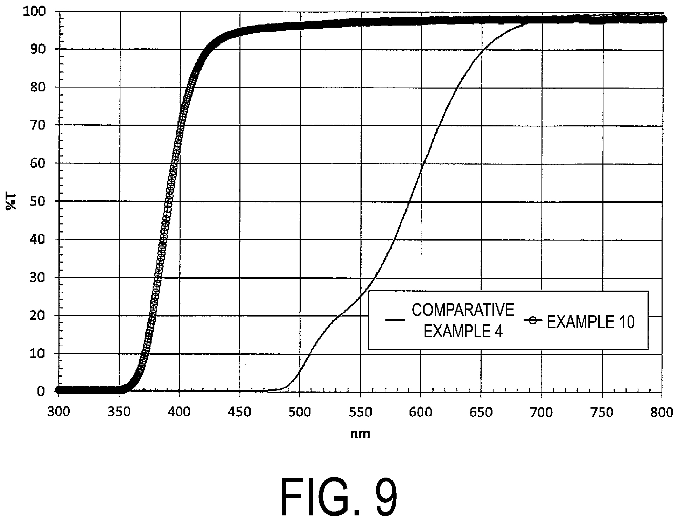

A comparison of output characteristics of dye-sensitized solar cells in which the following electrolyte solutions were used is shown in FIG. 8: an electrolyte solution known in the art (Comparative Example 4: an acetonitrile solution containing 0.05 M of iodine, 0.01 M of lithium iodide, 0.5 M of 1,2-dimethyl-3-propylimidazorium iodide, and 0.5 M of 4-t-butylpyridine) and an electrolyte solution (Example 10) prepared by adding 0.15 M of 1-dodecanethiol to the electrolyte known in the art to make the solution transparent. In addition, UV-Vis spectra of these electrolyte solutions are illustrated in FIG. 9.

As is clear from FIG. 8, the electrolyte solution of Example 10 was transparent and less colored, and thus had lower reduction in light use efficiency due to light absorption of the electrolyte solution, providing a higher current value than the electrolyte solution known in the art.

### Industrial Applicability

The electrolyte composition according to an embodiment of the present invention can be utilized as an electrolyte composition that needs ionic conductivity (e.g., such as a composition utilized for various devices, such as batteries, semiconductor devices, and photoelectric conversion devices) and may be used in applications utilizing a redox system of iodine (I⁻/I₃⁻ system). The electrolyte composition may be in liquid form but is transparent and less colored and thus can be utilized as an electrolyte solution for various devices. Among others, the electrolyte composition is useful as an electrolyte solution for solar cells (particularly dye-sensitized solar cells) in that the electrolyte composition is less colored and can improve photoelectric conversion efficiency.

## Claims

1. An electrolyte composition comprising iodine (A), a sulfur compound (B) excluding organic salts, and a basic nitrogen compound (C).

2. The electrolyte composition according to claim 1, wherein a light transmittance at a wavelength of 400 nm in an optical path length of 1 cm is 30% or higher.

3. The electrolyte composition according to claim 1 or 2, wherein the sulfur compound (B) is at least one selected from the group consisting of a thiol, a sulfide, and a disulfide.

4. The electrolyte composition according to claim 3, wherein the thiol is a thiol comprising a chain or cyclic alkane backbone.

5. The electrolyte composition according to claim 3 or 4, wherein the thiol is a linear or branched C₄₋₁₈ alkanethiol.

6. The electrolyte composition according to any of claims 1 to 5, wherein the basic nitrogen compound (C) is an amine.

7. The electrolyte composition according to claim 6, wherein the amine is a pyridine.

8. The electrolyte composition according to any of claims 1 to 7, wherein a proportion of the sulfur compound (B) is from 0.1 to 2 times the molar amount of the basic nitrogen compound (C).

9. The electrolyte composition according to any of claims 1 to 8, further comprising an iodide salt (D).

10. The electrolyte composition according to any of claims 1 to 9, comprising no cyclodextrin.

11. The electrolyte composition according to any of claims 1 to 10, wherein the electrolyte composition is an electrolyte solution.

12. A dye-sensitized solar cell, wherein an electrolyte solution is the electrolyte composition described in any of claims 1 to 11.
